# EUROPÄISCHE PATENTSCHRIFT

(11) **EP 3 820 652 B1**
(45) Veröffentlichungstag und Bekanntmachung des Hinweises auf die Patenterteilung: **29.03.2023**
(21) Anmeldenummer: 19733089.7
(22) Anmeldetag: 01.07.2019
(51) Int. Cl.: B25H 3/00, B62B 1/12

(54) **SCHARNIER FÜR LASTENTRANSPORTWAGEN**
HINGE FOR LOAD TRANSPORTER
CHARNIÈRE POUR VÉHICULES DE TRANSPORT DE CHARGE

(30) Priorität: 10.07.2018 EP 18182713
(43) Veröffentlichungstag der Anmeldung: 19.05.2021
(73) Patentinhaber: Hilti Aktiengesellschaft, 9494 Schaan (LI)
(72) Erfinder: KARLSSON, Kenth, 88142 Wasserburg (DE)
(74) Vertreter: Hilti Aktiengesellschaft Corporate Intellectual Property
(86) Internationale Anmeldenummer: PCT/EP2019/067508
(87) Internationale Veröffentlichungsnummer: WO 2020/011571

(56) Entgegenhaltungen:
- EP-A1- 1 929 897
- US-A1- 2014 110 447
- US-E- R E38 436

## Beschreibung

Die vorliegende Erfindung betrifft eine Spannvorrichtung zum variablen Positionieren einer Winkeleinstellung wenigstens einer Ablage an einem Lastentransportwagen zum Transportieren von Lasten, vorzugsweise Werkzeugkoffern.

Lastentransportwagen der eingangs genannten Art sind beispielsweise in Form von Sackkarren grundsätzlich aus dem Stand der Technik bekannt, so ist ein entsprechender Wagen gemäß dem Oberbegriff des Anspruchs 1 aus der US R E38 436 bekannt. Derartige Lastentransportwagen können ein oder mehrere Ablagen aufweisen, die dazu dienen, Lasten aufzunehmen bzw. zu tragen. Für gewöhnlich sind diese Ablagen starr und unbeweglich an dem Lastentransportwagen befestigt. Starre und unbewegliche Ablagen an Lastentransportwagen können ein Problem darstellen, wenn der Lastentransportwagen platzsparend verstaut werden soll.

Es ist die Aufgabe der vorliegenden Erfindung, das vorstehend genannte Problem zu lösen und insbesondere einen Lastentransportwagen zum Transportieren von Lasten, vorzugsweise Werkzeugkoffern, bereitzustellen, welcher sparend verstaut werden kann.

Diese Aufgabe wird gelöst durch eine Spannvorrichtung zum variablen Positionieren einer Winkeleinstellung wenigstens einer Ablage an einem Lastentransportwagen zum Transportieren von Lasten, vorzugsweise Werkzeugkoffern.

Erfindungsgemäß enthält die Spannvorrichtung einen Spannhebel zum reversiblen Einstellen der Spannvorrichtung in einer gespannten oder gelösten Stellung, eine Zugstange, welche von dem Spannhebel reversibel in eine erste oder zweite Position bewegbar ist, wobei sich die Spannvorrichtung in der gespannten Stellung befindet, wenn die Zugstange in die erste Position eingestellt ist und sich die Spannvorrichtung in der gelösten Stellung befindet, wenn die Zugstange in die zweite Position eingestellt ist, ein Anbindungselement zum Verbinden der Ablage mit der Spannvorrichtung und ein erstes und zweites Verbindungselement zum Verbinden der Spannvorrichtung mit einem Rahmen des Lastentransportwagens.

Hierdurch kann auf einfache Art und Weise eine Ablage flach nach unten geklappt werden, sodass die Ausmaße des Lastentransportwagens reduziert werden können.

Die erste Position des Spannhebels entspricht dabei einer Stellung des Spannhebels, durch die die Spannvorrichtung sich in der gespannten Stellung bzw. in einem gespannten Zustand befindet. Die zweite Position des Spannhebels entspricht hingegen einer Stellung des Spannhebels, durch die die Spannvorrichtung sich in der gelösten Stellung bzw. in dem gelösten Zustand befindet.

Erfindungsgemäß ist das Anbindungselement in Form einer zylindrischen Röhre ausgestaltet, welche um die Zugstange angeordnet ist. Hierdurch kann auf einfache Art und Weise das Anbindungselement und die Zugstange platzsparend an dem Lastentransportwagen montiert werden.

Entsprechend einer weiteren vorteilhaften Ausführungsform kann es möglich sein, dass an einem ersten Ende des Anbindungselements ein erstes Positionierelement und an einem zweiten Ende des Anbindungselements ein zweites Positionierelement vorgesehen ist. Mit Hilfe der beiden Positionierelemente kann das mit der Ablage verbundene Anbindungselement in seiner Position und Ausrichtung relativ zum Rahmen des Lastentransportwagens eingestellt werden.

Gemäß einer weiteren vorteilhaften Ausführungsform kann es möglich sein, dass die Zugstange ein erstes Ende sowie ein zweites Ende enthält, wobei das erste Ende mit dem Spannhebel und das zweite Ende mit einem Blockierelement verbindbar ist, sodass, wenn der Spannhebel von der gespannten Stellung in die gelöste Stellung bewegt wird, die Zugstange von der ersten Position in die zweite Position gebracht wird, wobei in der ersten Position sich das erste Positionierelement in einer formschlüssigen Verbindung mit dem ersten Verbindungselement und sich das zweite Positionierelement in einer formschlüssigen Verbindung mit dem Blockierelement befindet und wobei in der zweiten Position das erste Positionierelement relativ zu dem ersten Verbindungselement und das zweite Positionierelement relativ zu dem Blockierelement bewegbar ist.

Entsprechend einer weiteren vorteilhaften Ausführungsform kann es möglich sein, dass die Zugstange ein erstes Ende sowie ein zweites Ende enthält, wobei das erste Ende mit dem Spannhebel und das zweite Ende mit einem Blockierelement verbindbar ist, sodass, wenn der Spannhebel von der gespannten Stellung in die gelöste Stellung bewegt wird, die Zugstange von der ersten Position in die zweite Position gebracht wird, wobei in der ersten Position sich das erste Positionierelement in einer kraftschlüssigen Verbindung mit dem ersten Verbindungselement und sich das zweite Positionierelement in einer kraftschlüssigen Verbindung mit dem Blockierelement befindet und wobei in der zweiten Position das erste Positionierelement relativ zu dem ersten Verbindungselement und das zweite Positionierelement relativ zu dem Blockierelement bewegbar ist.

Gemäß einer weiteren vorteilhaften Ausführungsform kann es möglich sein, dass das erste Positionierelement an einer ersten Seitenfläche eine Vielzahl an Erhebungen und das erste Verbindungselement an einer ersten Seitenfläche eine Vielzahl an Erhebungen enthält, welche korrespondierend zu den Erhebungen des ersten Positionierelements ausgestaltet sind, sodass reversibel eine kraftschlüssige Verbindung zwischen der ersten Seitenfläche des ersten Verbindungselements und dem ersten Positionierelement erzeugbar ist. Durch die Vielzahl an Erhebungen und die entsprechenden bzw. korrespondierenden Zwischenräume sind einzelne Positionseinstellungen für das mit der Ablage verbundene Anbindungselement möglich.

Entsprechend einer weiteren vorteilhaften Ausführungsform kann es möglich sein, dass das zweite Positionierelement an einer ersten Seitenfläche eine Vielzahl an Erhebungen und das Blockierelement an einer ersten Seitenfläche eine Vielzahl an Erhebungen enthält, welche korrespondierend zu den Erhebungen des zweiten Positionierelements ausgestaltet sind, sodass reversibel eine kraftschlüssige Verbindung zwischen der ersten Seitenfläche des Blockierelements und dem zweiten Positionierelement erzeugbar ist. Durch die Vielzahl an Erhebungen und die entsprechenden bzw. korrespondierenden Zwischenräume sind einzelne Positionseinstellungen für das mit der Ablage verbundene Anbindungselement möglich.

Gemäß einer weiteren vorteilhaften Ausführungsform kann es möglich sein, dass der Spannhebel einen gerundeten Vorsprung enthält, wodurch eine Kraft auf die Zugstange ausgeübt werden kann, wenn der Spannhebel von der gespannten in die gelöste Stellung bewegt wird, sodass die Zugstange von der ersten in die zweite Position bewegt wird. Durch den gerundeten Vorsprung kann mit einer Drehbewegung des Spannhebels lineare bzw. vertikale Bewegung der Zugstange erzeugt werden.

Entsprechend einer weiteren vorteilhaften Ausführungsform kann es möglich sein, dass ein Federelement zwischen dem Spannhebel und dem ersten Verbindungselement vorgesehen ist, welches als Druckfeder ausgestaltet ist, sodass der Spannhebel von der gelösten Stellung gegen eine Federkraft des Federelements in die gespannte Stellung bewegbar ist. Durch die in dem Federelement speicherbare Energie kann die Bewegung des Spannhebels von einer gespannten Stellung in eine gelöste Stellung erleichtert werden.

Gemäß einer weiteren vorteilhaften Ausführungsform kann es möglich sein, dass das Blockierelement wenigstens einen Stift und das zweite Verbindungselement eine Aussparung zur Aufnahme und Führung des wenigstens einen Stifts enthält, wobei die Aussparung in einer Richtung X länger ausgestaltet ist als der wenigstens eine Stift, sodass der wenigstens eine Stift in der Aussparung von einer ersten Position in eine zweite Position bewegbar ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine perspektivische Vorderansicht eines Lastentransportwagens mit einer erfindungsgemäßen Spannvorrichtung;
- Fig. 2: eine perspektivische Rückansicht des Lastentransportwagens mit der erfindungsgemäßen Spannvorrichtung;
- Fig. 3: eine Detailansicht der erfindungsgemäßen Spannvorrichtung mit einer Ablage;
- Fig. 4: eine weitere Detailansicht der erfindungsgemäßen Spannvorrichtung in einer gespannten Stellung ohne Ablage;
- Fig. 5: eine erste perspektivische Ansicht eines Spannhebels;
- Fig. 6: eine weitere perspektivische Ansicht des Spannhebels;
- Fig. 7: eine erste perspektivische Ansicht eines ersten Verbindungselements;
- Fig. 8: eine weitere perspektivische Ansicht des ersten Verbindungselements;
- Fig. 9: eine erste perspektivische Ansicht eines zweiten Verbindungselements;
- Fig. 10: eine weitere perspektivische Ansicht des zweiten Verbindungselements;
- Fig. 11: eine Schnittansicht durch das zweite Verbindungselement;
- Fig. 12: eine weitere perspektivische Ansicht des zweiten Verbindungselements;
- Fig. 13: eine perspektivische Ansicht auf den Spannhebel, ein Federelement, ein erstes Ende einer Zugstange und ein erstes Positionselement;
- Fig. 14: eine perspektivische Ansicht auf eine Achse des Spannhebels, das Federelement, das erste Ende der Zugstange und das erste Positionselement;
- Fig. 15: eine weitere perspektivische Ansicht auf den Spannhebel, das erste Ende der Zugstange, das erste Positionselement, ein Anbindungselement und einen Teil eines Rahmens des Lastentransportwagens;
- Fig. 16: eine weitere perspektivische Ansicht auf den Spannhebel, das erste Ende der Zugstange, das erste Positionselement, das Anbindungselement und einen Teil des Rahmens des Lastentransportwagens;
- Fig. 17: eine perspektivische Ansicht auf das erste Ende der Zugstange, die Achse des Spannhebels, das Federelement, das erste Positionselement und einen Teil des Rahmens des Lastentransportwagens;
- Fig. 18: eine Schnittansicht durch das erste Verbindungselement;
- Fig. 19: eine perspektivische Ansicht auf das zweite Ende der Zugstange, das zweite Positionselement und einen Teil des Rahmens des Lastentransportwagens;
- Fig. 20: eine weitere perspektivische Ansicht auf das zweite Ende der Zugstange, das zweite Positionselement, das zweite Verbindungselement und einen Teil des Rahmens des Lastentransportwagens;

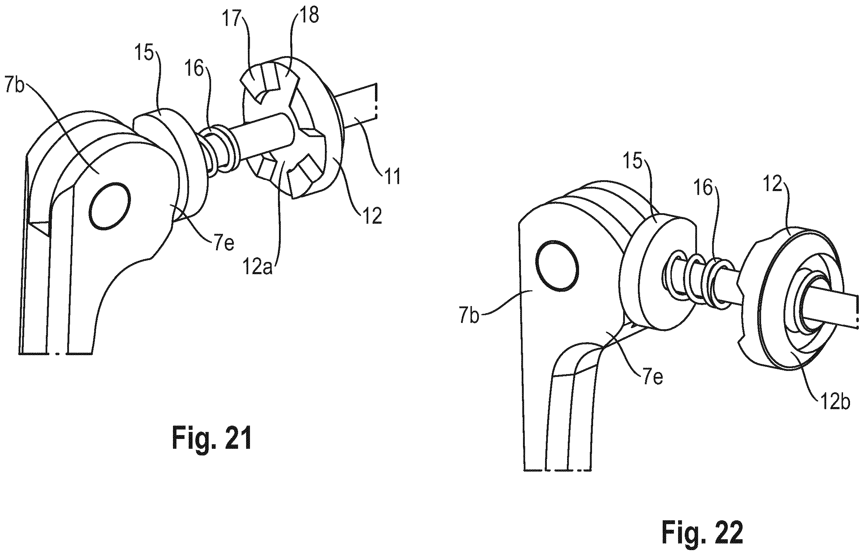

- Fig. 21: eine weitere perspektivische Ansicht auf den Spannhebel, das Federelement, das erste Ende der Zugstange und das erste Positionselement;
- Fig. 22: eine weitere perspektivische Ansicht auf den Spannhebel, das Federelement, das erste Ende der Zugstange und das erste Positionselement;
- Fig. 23: eine weitere perspektivische Ansicht auf das zweite Ende der Zugstange, das zweite Positionselement und einen Teil des Rahmens des Lastentransportwagens;
- Fig. 24: eine weitere perspektivische Ansicht auf das zweite Ende der Zugstange, das zweite Positionselement, ein Blockierelement und einen Teil des Rahmens des Lastentransportwagens;
- Fig. 25: eine weitere perspektivische Ansicht auf das zweite Ende der Zugstange, das zweite Positionselement, das Blockierelement, das zweite Verbindungselement und einen Teil des Rahmens des Lastentransportwagens;
- Fig. 26: eine weitere perspektivische Ansicht auf das zweite Ende der Zugstange, das zweite Positionselement, das Blockierelement, das zweite Verbindungselement und einen Teil des Rahmens des Lastentransportwagens;

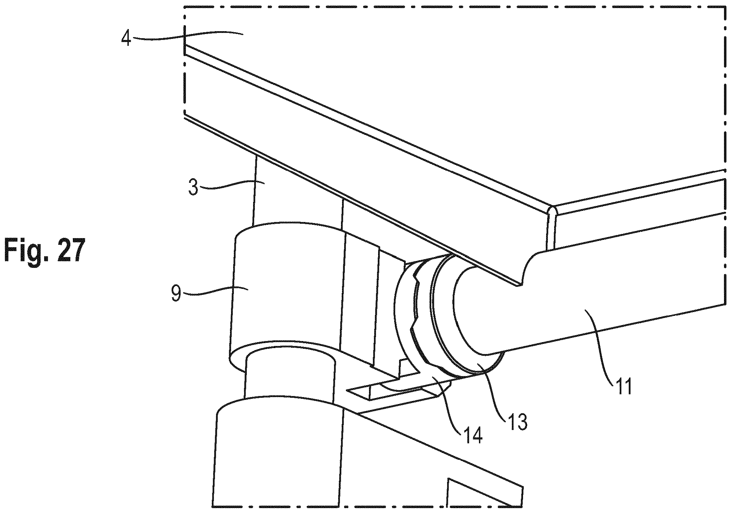

- Fig. 27: eine Unteransicht auf das zweite Ende der Zugstange, das zweite Positionselement, das zweite Verbindungselement, das Blockierelement, einen Teil des Rahmens des Lastentransportwagens, das Anbindungselement und einen Teil der Ablage;

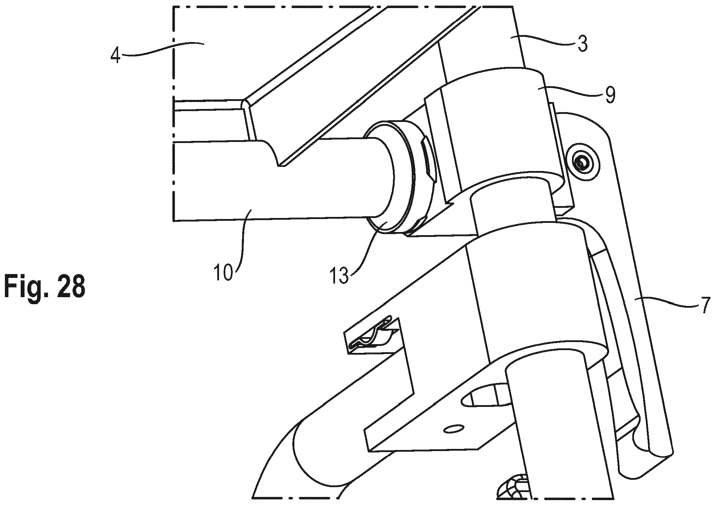

- Fig. 28: eine Unteransicht auf das erste Ende der Zugstange, das erste Positionselement, das erste Verbindungselement, einen Teil des Rahmens des Lastentransportwagens, das Anbindungselement und einen Teil der Ablage;
- Fig. 29: eine Schnittansicht auf den Spannhebel, das erste Verbindungselement, das erste Ende der Zugstange, das Anbindungselement, das Federelement, das erste Positionselement und den Rahmen des Lastentransportwagens; und
- Fig. 30: eine perspektivische Ansicht auf das erste Ende der Zugstange, das erste Verbindungselement, das Federelement, das erste Positionselement, die Achse des Spannhebels und einen Teil des Rahmens des Lastentransportwagens.

### Ausführungsbeispiel:

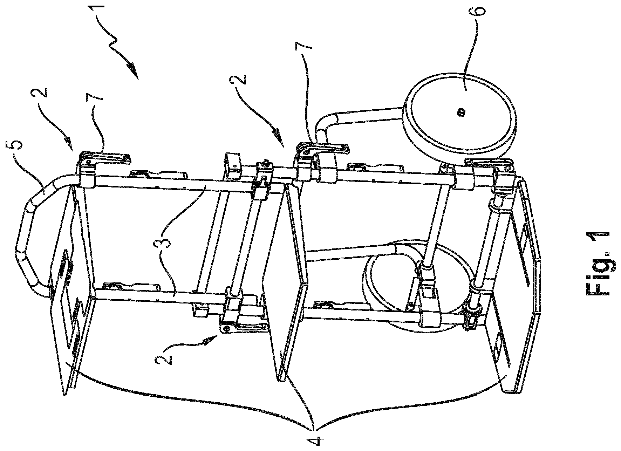

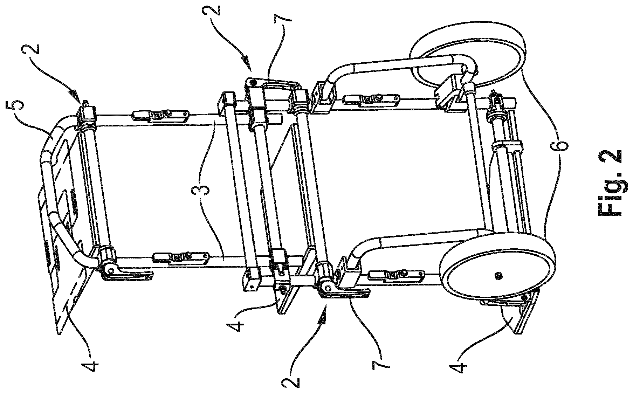

Figur 1 und 2 zeigen einen Lastentransportwagen 1 mit einer erfindungsgemäßen Spannvorrichtung 2. Der Lastentransportwagen 1 dient zum Transportieren von Lasten, vorzugsweise Werkzeugkoffern. Der Lastentransportwagen 1 enthält im Wesentlichen einen Rohrrahmen 3, drei Ablagen 4, einen Handgriff 5, zwei Räder 6 sowie die Spannvorrichtung 2. Es ist dabei möglich, dass der Lastentransportwagen 1 mehr oder weniger als drei Ablagen 4 enthält. Zu jeder Ablage 4 kann eine Spannvorrichtung 2 vorgesehen sein, um die Ablage 4 erfindungsgemäß in einer beliebigen Lage bzw. Ausrichtung zu fixieren bzw. zu positionieren.

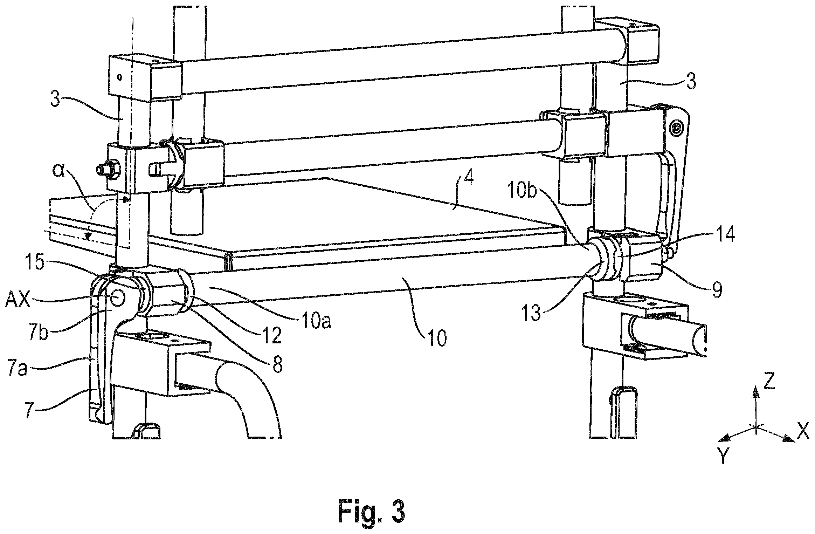

Wie in Figur 3 dargestellt, enthält die Spannvorrichtung 2 im Wesentlichen einen Spannhebel 7, eine Achse 8 des Spannhebels 7, ein erstes Verbindungselement 8, ein zweites Verbindungselement 9, ein Anbindungselement 10, eine Zugstange 11, ein erstes Positionierelement 12, ein zweites Positionierelement 13, ein Blockierelement 14, ein Anschlagelement 15 und ein Federelement 16.

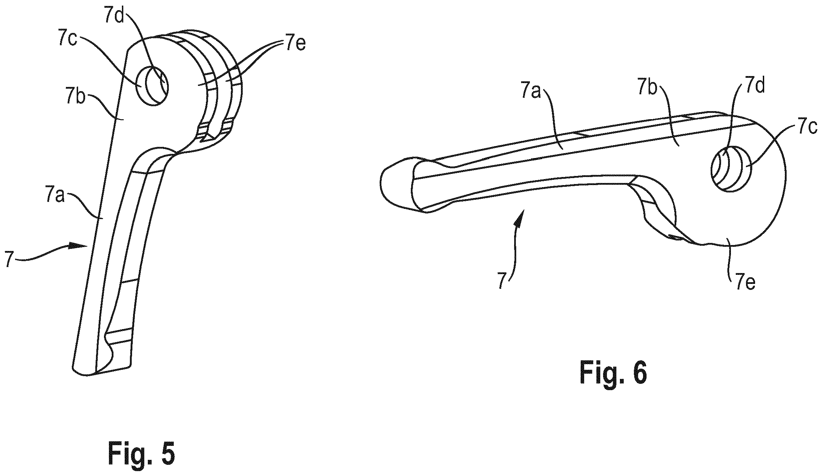

Der Spannhebel 7 enthält einen Griffanteil 7a sowie einen Verbindungsanteil 7b, vgl. Figur 5 und 6. Der Verbindungsanteil 7b enthält wiederum zwei Aussparungen 7c, 7d für die Achse AX des Spannhebels 7, welche dazu dient, den Verbindungsanteil 7b mit der Zugstange 11 zu verbinden. Des Weiteren enthält der Spannhebel 7 an dem Verbindungsanteil 7b einen gerundeten Vorsprung 7e. Der gerundete Vorsprung 7e kann auch als Nocken oder Exzenter bezeichnet werden. Wie nachfolgend im Detail beschrieben wird, dient der gerundete Vorsprung 7e ausüben einer Kraft auf die Zugstange 11, wenn die Spannvorrichtung 2 bzw. der Spannhebel 7 von einer gespannten in eine gelöste Stellung bewegt wird, sodass die Zugstange 11 von einer ersten in eine zweite Position bewegt wird.

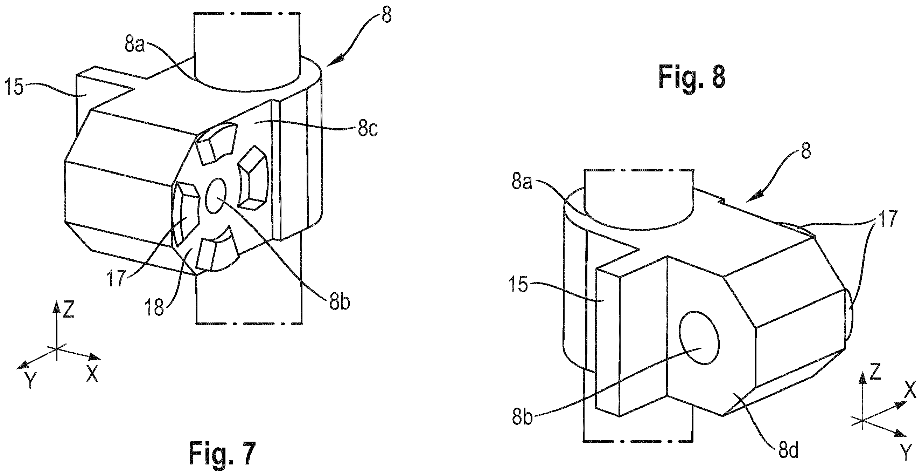

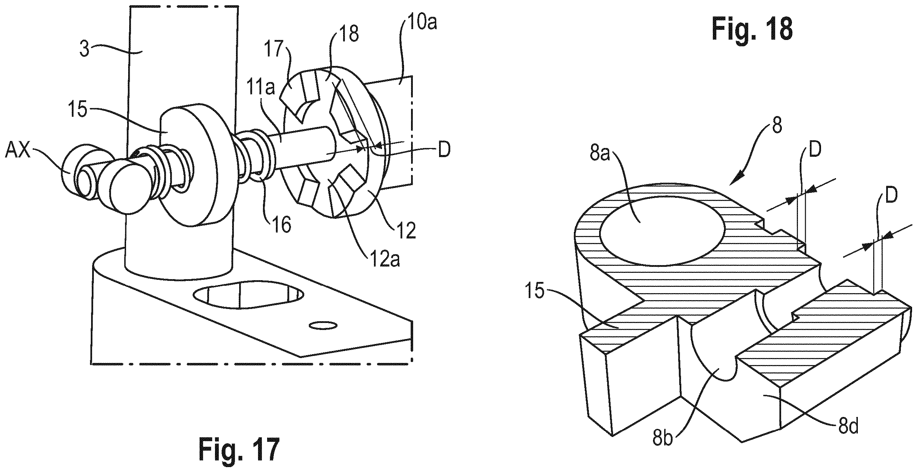

Wie in Figur 7, 8 und 18 gezeigt, enthält das erste Verbindungselement 8 im Wesentlichen einen Hauptkörper mit einer ersten Durchbohrung 8a zur Anbringung des ersten Verbindungselements 8 an dem Rohrrahmen 3 des Lastentransportwagens 1 und einer zweiten Durchbohrung 8b zur Aufnahme der Zugstange 11 sowie des Federelements 16.

Die erste Durchbohrung 8a und die zweite Durchbohrung 8b sind im Wesentlichen rechtwinklig zueinander angeordnet.

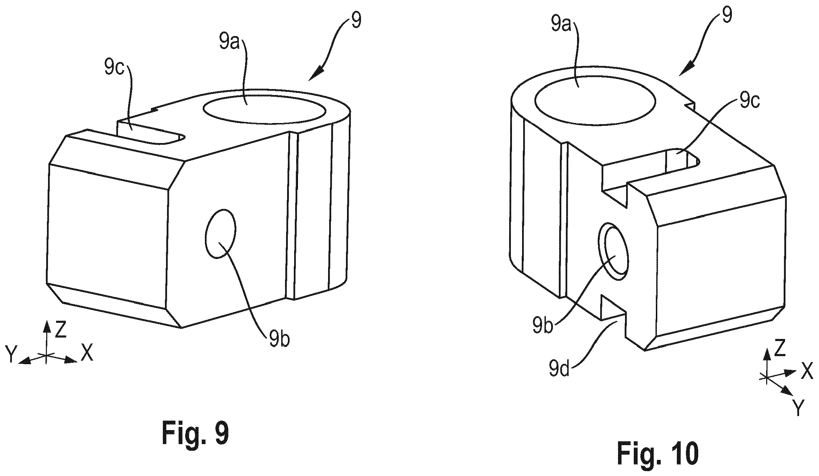

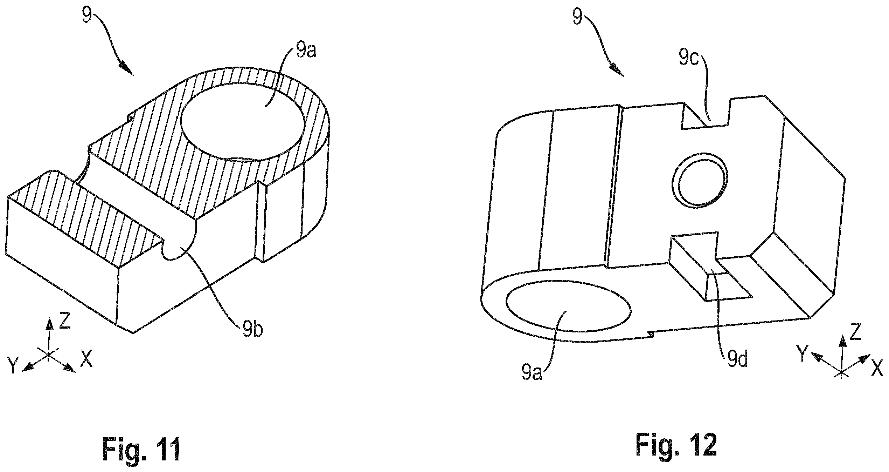

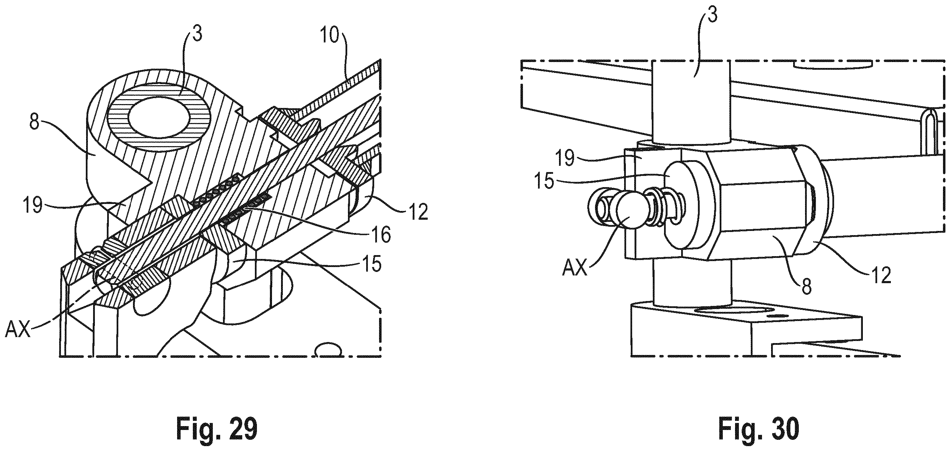

Die zweite Durchbohrung 8b ist zweiteilig ausgestaltet, sodass ein erster Anteil der zweiten Durchbohrung einen größeren Durchmesser aufweist als ein zweiter Anteil der zweiten Durchbohrung. Durch den größeren Durchmesser des ersten Anteils der zweiten Durchbohrung 8b kann das Federelement 16 um die Zugstange 11 herum positioniert in dem zweiten Anteil aufgenommen werden. Des Weiteren enthält das erste Verbindungselement 8 eine erste Seitenfläche 8c und eine zweite Seitenfläche 8d. Die beiden Seitenflächen 8c, 8d sind im Wesentlichen parallel zueinander angeordnet. Die erste Seitenfläche 8c des ersten Verbindungselements 8 weist vier gleichmäßig zueinander angeordnete Erhebungen auf 17. Die Erhebungen 17 sind in Form von Zähnen ausgestaltet, wobei zwischen den einzelnen Zähnen jeweils ein Zwischenraum 18 vorgesehen ist. Ein Zwischenraum 18 entspricht in seinen Ausmaßen und Form einer als Zahn ausgestalteten Erhebung 17. Die zweite Seitenfläche 8d weist ein Abstützelement 19 auf, welche sich senkrecht von der zweiten Seitenfläche 8d erstreckt. Gemäß einer alternativen Ausgestaltungsform kann die erste Seitenfläche 8c mehr oder auch weniger als vier Erhebungen 17 enthalten. Das Abstützelement 19 dient zum Abstützen des Spannhebels 7 von dem ersten Verbindungselement 8, vgl. Figur 29 und 30. Wie in Figur 9, 10, 11 und 12 gezeigt, enthält das zweite Verbindungselement 9 im Wesentlichen einen Hauptkörper mit einer ersten Durchbohrung 9a zur Anbringung des zweiten Verbindungsanteils an dem Rohrrahmen 3 des Lastentransportwagens 1 und einer zweiten Durchbohrung 9b zur Aufnahme der Zugstange 11. Die Zugstange 11 enthält ein erstes Ende 11a und ein zweites Ende 11b. Das zweite Ende 11b ist mit dem Blockierelement 14 verbunden. Wie schon bei dem ersten Verbindungselement 8 sind auch bei dem zweiten Verbindungselement 9 die erste Durchbohrung 9a und die zweite Durchbohrung 9b im Wesentlichen rechtwinklig zueinander angeordnet. Darüber hinaus enthält das zweite Verbindungselement 9 eine erste Aussparung 9c und zweite Aussparung 9d, wobei die erste Aussparung 9c in Pfeilrichtung Z über der zweiten Durchbohrung 9b und die zweite Aussparung 9d entgegen der Pfeilrichtung Z unter der zweiten Durchbohrung 9b positioniert sind. Beide Aussparungen 9c, 9d erstrecken sich parallel zu der zweiten Durchbohrung 9b.

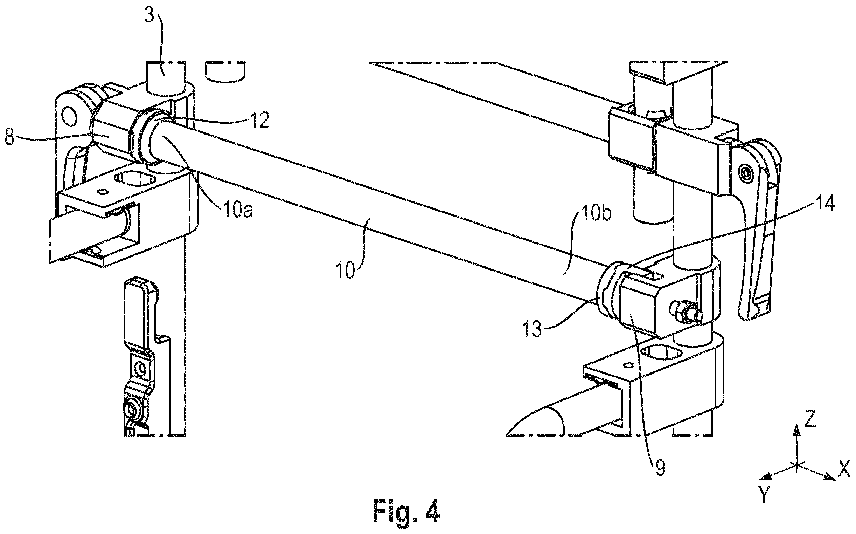

Das Anbindungselement 10 ist im Wesentlichen als zylindrische Röhre ausgestaltet und, wie in Figur 4 dargestellt, um die Zugstange 11 positioniert bzw. die Zugstange 11 kann in das Innere des Anbindungselements 10 aufgenommen werden. Wie in Figur 3 zu erkennen ist, erstreckt sich von dem Anbindungselement 10 entgegen der Pfeilrichtung X eine Ablage 4, welche mit einer ersten Kantenseite 4a an dem Anbindungselement 10 befestigt und im Wesentlichen als Platte ausgestaltet ist. Des Weiteren enthält das Anbindungselement 10 ein erstes Ende 10a sowie ein zweites Ende 10b. An dem ersten Ende 10a ist das erste Positionierelement 12 und an dem zweiten Ende 10b ist das zweite Positionierelement 13 befestigt, vgl. Figur 3 und 4. Das erste Positionierelement 12 ist im Wesentlichen als Ring ausgestaltet und enthält eine erste 12a und eine zweite Seitenfläche 12b. An der ersten Seitenfläche 12a des ersten Positionierelements 12 sind vier Erhebungen 17 in Form von Zähnen mit dazwischenliegenden Zwischenräumen 18 vorgesehen. Ein Zwischenraum 18 entspricht in seinen Ausmaßen und Form einer als Zahn ausgestalteten Erhebung 17. Die Form und Anordnung der als Zähne ausgestalteten Erhebungen 17 an der ersten Seitenfläche 12a des ersten Positionierelements 12 korrespondiert mit den als Zähne ausgestalteten Erhebungen 17 an der ersten Seitenfläche 8a des ersten Verbindungselements 8. Mit anderen Worten: die als Zähne ausgestalteten Erhebungen 17 an der ersten Seitenfläche 12a des ersten Positionierelements 12 passen in die Zwischenräume 18 zwischen den als Zähne ausgestalteten Erhebungen 17 an der ersten Seitenfläche 8c des ersten Verbindungselements 8.

Das zweite Positionierelement 13 ist ebenfalls im Wesentlichen als Ring ausgestaltet und enthält eine erste und eine zweite Seitenfläche 13a, 13b. An der ersten Seitenfläche 13a des zweiten Positionierelements 13 sind ebenfalls vier Erhebungen 17 in Form von Zähnen mit dazwischenliegenden Zwischenräumen 18 vorgesehen.

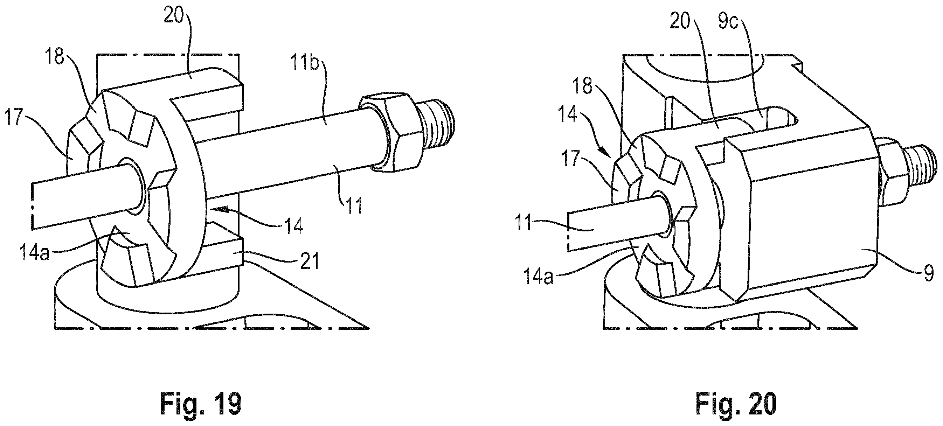

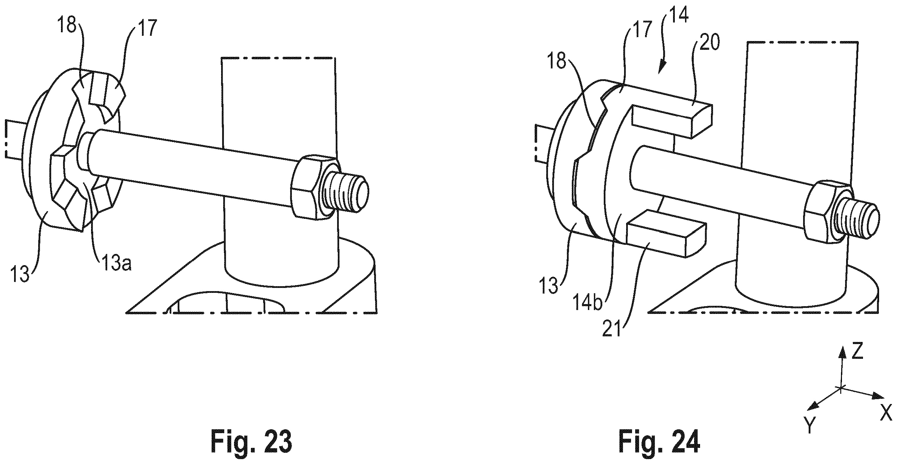

Wie in Figur 19, 20, 23, 24, 25 und 26 dargestellt, ist das Blockierelement 14 im Wesentlichen in Form eines Rings mit einer ersten Seitenfläche 14a und zweiten Seitenfläche 14b ausgestaltet. Wie bereits vorstehend erwähnt, ist das Blockierelement 14 mit dem zweiten Ende 11b der Zugstange 11 verbunden, sodass eine Bewegung der Zugstange 11 in Pfeilrichtung X oder gegen die Pfeilrichtung X auf das Blockierelement 14 übertragen wird. Die erste Seitenfläche 14a des Blockierelements 14 weist vier gleichmäßig zueinander angeordnete Erhebungen 17 auf. Die Erhebungen 17 sind in Form von Zähnen ausgestaltet, wobei zwischen den einzelnen Zähnen jeweils ein Zwischenraum 18 vorgesehen ist. Ein Zwischenraum 18 entspricht in seinen Ausmaßen und Form einer als Zahn ausgestalteten Erhebung 17. Die Form und Anordnung der als Zähne ausgestalteten Erhebungen 17 an der ersten Seitenfläche 14a des Blockierelements 14 korrespondiert mit den als Zähne ausgestalteten Erhebungen 17 an der ersten Seitenfläche 13a des zweiten Positionierelements 13. Mit anderen Worten: die als Zähne ausgestalteten Erhebungen 17 an der ersten Seitenfläche 14a des Blockierelements 14 passen in die Zwischenräume 18 zwischen den als Zähne ausgestalteten Erhebungen 17 an der ersten Seitenfläche 13a des zweiten Positionierelements 13.

Des Weiteren enthält das Blockierelement 14 an der zweiten Seitenfläche 14b einen ersten Stift 20 sowie einen zweiten Stift 21, welche übereinander in Pfeilrichtung Z positioniert sind. Die Querschnittsfläche des ersten Stifts 20 entspricht im Wesentlichen der Querschnittsfläche der ersten Aussparung 9c des zweiten Verbindungselements 9 und die Querschnittsfläche des zweiten Stifts 21 entspricht im Wesentlichen der Querschnittsfläche der zweiten Aussparung 9d des zweiten Verbindungselements 9.

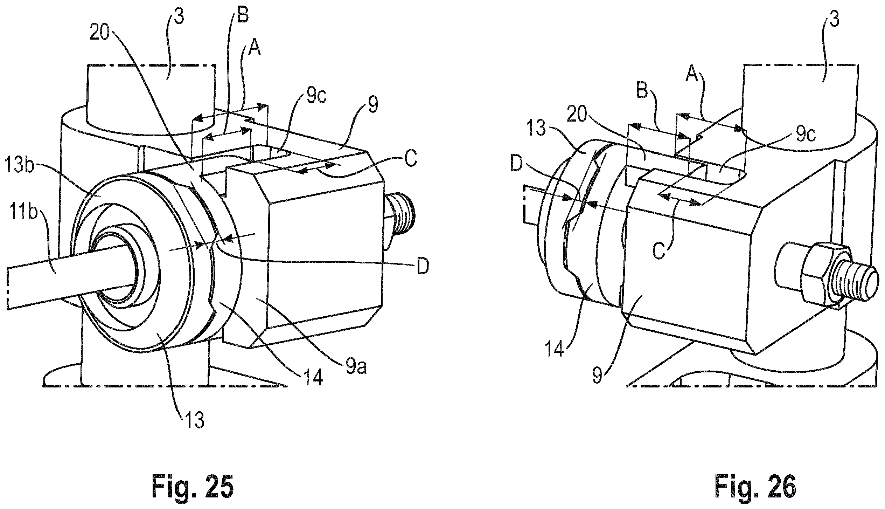

In Figur 25 und 26 ist die Spannvorrichtung 2 in einer gespannten Stellung gezeigt, wobei die Länge A der ersten oder zweiten Aussparung 9c, 9d des zweiten Verbindungselements 9 größer ist als die Länge B des ersten oder zweiten Stifts 20, 21 des Blockierelements 14. Die Länge C zwischen dem freien Ende des ersten oder zweiten Stifts 20, 21 und dem Ende der ersten oder zweiten Aussparung 9c, 9d ist dabei länger als die Höhe D einer als Zahn ausgestalteten Erhebung 17.

Entsprechend einer alternativen Ausführungsform kann das Blockierelement 14 mehr oder weniger als zwei Stifte 20, 21 und das zweite Verbindungselement 9 mehr oder weniger als zwei Aussparungen 9c, 9d enthalten. Die Anzahl der Stifte und die Anzahl der Aussparungen müssen entweder gleich sein, oder die Anzahl der Aussparungen kann größer sein als die Anzahl der Stifte, sodass die Stifte stets in die Aussparungen passen.1

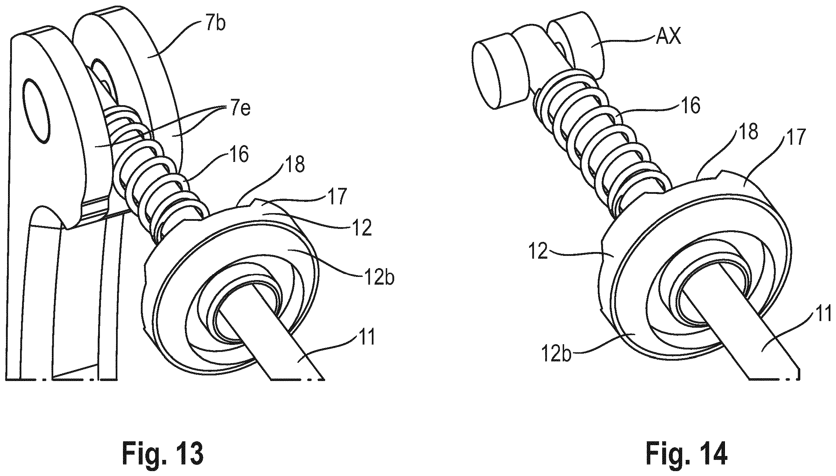

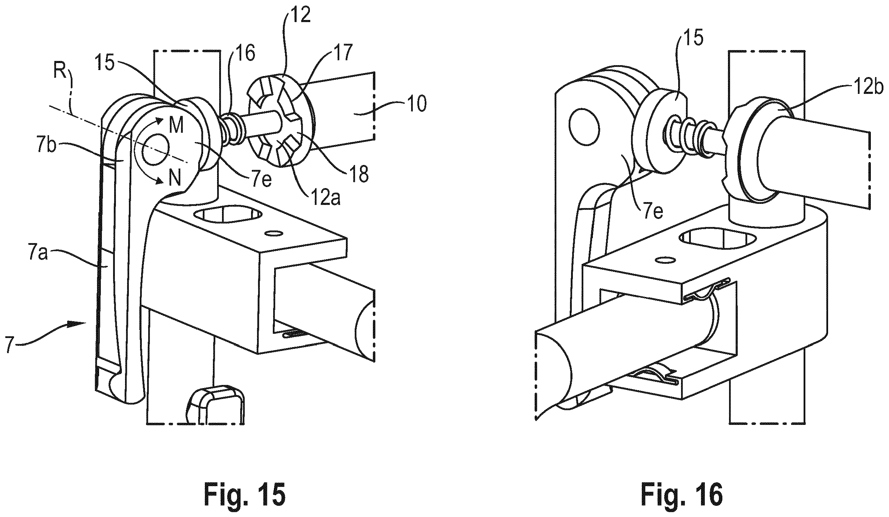

In einem zusammengebauten und montierten Zustand der Spannvorrichtung 2 wird das erste und zweite Verbindungselement 8, 9 an den Rohrrahmen 3 des Lastentransportwagens 1 montiert. Hierzu erstreckt sich jeweils ein vertikaler Anteil des Rohrrahmens 3 des Lastentransportwagens 1 durch die erste Durchbohrung 8a, 9a des ersten und zweiten Verbindungselements 8, 9, vgl. Figur 3 und 4. Die Zugstange 11 erstreckt sich mit dem ersten Ende 11a durch die zweite Durchbohrung 8b des ersten Verbindungselements 8 und mit dem zweiten Ende 11b durch die zweite Durchbohrung 9b des zweiten Verbindungselements 9. Wie in den Figuren 13 bis 15 gezeigt, ist das erste Ende 11a der Zugstange 11 mit der Achse AX des Spannhebels 7 drehbar verbunden. Die Achse AX erstreckt sich durch die beiden Aussparungen 7c, 7d des Spannhebels 7, sodass der Spannhebel 7 in Drehrichtung M oder N um die Drehachse R relativ zu der Zugstange 11 gedreht werden kann. Der als Nocken ausgestaltete gerundete Vorsprung 7e des Verbindungsanteils 7b weist dabei in Pfeilrichtung X zu dem ersten Verbindungselement 8. Das Federelement 16 ist als Druckfeder ausgestaltet und ist zwischen dem Verbindungsanteil 7b des Spannhebels 7 sowie dem ersten Verbindungselement 8 positioniert. Das als Druckfeder ausgestaltet Federelement 16 übt eine Federkraft von dem ersten Verbindungselement 16 auf den Verbindungsanteil 7b des Spannhebels 7 aus.

Zwischen dem Verbindungsanteil 7b des Spannhebels 7 und der zweiten Seitenfläche 8b des ersten Verbindungselements 8 ist das Anschlagelement 15 positioniert, vgl. Figur 29 und 30. Das Anschlagelement 15 dient dem als Nocken ausgestaltete gerundete Vorsprung 7e des Verbindungsanteils 7b des Spannhebels 7 als Anschlag bzw. zum Abstützen.

Die Zugstange 11 ist in das als Röhre ausgestaltete Anbindungselement 10 mit der Ablage 4 eingeführt.

Das erste Positionselement 12 ist an dem ersten Ende 10a des Anbindungselements 10 und das zweite Positionselement 13 ist an dem zweiten Ende 10b des Anbindungselements 10 positioniert. Die erste Seitenfläche 12a des ersten Positionselements 12 weist auf die erste Seitenfläche 8a des ersten Verbindungselements 8. Die erste Seitenfläche 13a des zweiten Positionselements 13 weist auf die erste Seitenfläche 14a des Blockierelements 14. Die Stifte 20, 21 des Blockierelements 14 sind entsprechend in die Aussparungen des zweiten Verbindungselements eingeführt.

In Figur 3 und 4 ist die Spannvorrichtung 2 in einem gespannten Zustand, wobei der Spannhebel 7 entgegen der Pfeilrichtung Z nach unten zeigt und sich in einer gespannten Stellung befindet. Der als Nocken ausgestaltete gerundete Vorsprung 7e des Verbindungsanteils 7b des Spannhebels 7 zeigt in Pfeilrichtung X und drückt auf das Anschlagelement 15. Das Federelement 16 ist im gespannten Zustand zusammengedrückt. Die mit dem Spannhebel 7 verbundene Zugstange 11 ist maximal entgegen der Pfeilrichtung X bewegt. Die als Zähne ausgestaltete Erhebungen 17 des ersten Positionselements 12 sind in den Zwischenräumen 18 des ersten Verbindungselements 8 positioniert. Gleichzeitig sind die als Zähne ausgestaltete Erhebungen 17 des Blockierelements 14 sind in den Zwischenräumen 18 des zweiten Positionselements 13 positioniert. Die Anordnung bzw. der Winkel α des Anbindungselements 10 mit der Ablage 4 zu dem Rohrrahmen 3 des Lastentransportwagens 1 ist im gespannten Zustand fest.

In einem gelösten Zustand der Spannvorrichtung 2 ist der Spannhebel 7 in Pfeilrichtung Y senkrecht gestellt und befindet sich in einer gelösten Stellung. Der als Nocken ausgestaltete gerundete Vorsprung 7e des Verbindungsanteils 7b des Spannhebels 7 zeigt gegen die Pfeilrichtung Z und drückt nicht mehr auf das Anschlagelement 15. Der mit dem ersten Ende 11a der Zugstange 11 verbundene Verbindungsanteil 7b des Spannhebels 7 drückt die Zugstange 11 entgegen die Pfeilrichtung Y. Gleichzeitig wird das Federelement 16 zwischen dem Verbindungsanteil 7b des Spannhebels 7 und dem ersten Verbindungselement 8 zusammengedrückt bzw. komprimiert. Die in dem Federelement 16 gespeicherte Energie unterstützt die Rückführung des Spannhebels 7 von der gelösten Stellung wieder in die gespannte Stellung. Wenn die Zugstange 11 von dem Verbindungsanteil 7b des Spannhebels 7 entgegen die Pfeilrichtung Y gedrückt ist, wird das Blockierelement 14 ebenfalls entgegen die Pfeilrichtung Y gedrückt. Das Blockierelement 14 wird dabei wenigstens um die Höhe D (Höhe der als Zähne ausgestalteten Erhebungen 17) gegen die Pfeilrichtung Y gedrückt, vgl. Figur 25 und 26. Die Stifte 20, 21 des Blockierelements 14 werden mit Hilfe der Zugstange 11 wenigstens um die Höhe D in die entsprechenden Aussparungen des zweiten Verbindungselements 9 geschoben.

Wenn die Zugstange 11 mit dem Blockierelement 14 wenigstens um die Höhe D in Pfeilrichtung X gedrückt ist, hat das Anbindungselement 10 mit dem ersten und zweiten Positionierelement 12, 13 genügend Platz ebenfalls in Pfeilrichtung X geschoben zu werden, sodass die als Zähne ausgestalteten Erhebungen 17 des ersten Positionierelements 12 nicht mehr im Eingriff mit den als Zähnen ausgestalteten Erhebungen 17 des ersten Verbindungselements 8 stehen. Gleichzeitig stehen die die als Zähne ausgestalteten Erhebungen 17 des zweiten Positionierelements 13 nicht mehr im Eingriff mit den als Zähnen ausgestalteten Erhebungen 17 des Blockierelements 14.

Somit kann das Anbindungselement 10 mit der Ablage 4 relativ zu dem Rohrrahmen 3 des Lastentransportwagens 1 gedreht werden, wodurch der Winkel α des Anbindungselements 10 mit der Ablage 4 zu dem Rohrrahmen 3 des Lastentransportwagens 1 geändert werden kann. Insbesondere kann die Ablage 4 vollständig nach unten gestellt werden, sodass die Ablage 4 im Wesentlichen vertikal und gegen die Pfeilrichtung Z angeordnet ist.

Um die Ablage 4 wieder zu fixieren bzw. eine bestimmte Winkeleinstellung der Ablage 4 einzustellen, wird die Spannvorrichtung 2 wieder in den gespannten Zustand gebracht. Hierzu wird der Spannhebel 7 wieder in die gespannte Stellung gebracht. Die Zugstange 11 wird hierdurch gegen die Pfeilrichtung X gezogen, sodass sich das Blockierelement 14 und das zweite Positionierelement 13 wieder kontaktieren, wobei die als Zähne ausgestalteten Erhebungen 17 des Blockierelements 14 wieder im Eingriff mit den als Zähnen ausgestalteten Erhebungen 17 des zweiten Positionierelements 13 stehen. Gleichzeitig wird das erste Positionierelement 12 und das erste Verbindungselement 8 wieder in Kontakt gebracht, sodass die als Zähne ausgestalteten Erhebungen 17 des ersten Positionierelements 12 wieder im Eingriff mit den als Zähnen ausgestalteten Erhebungen 17 des ersten Verbindungselements 8 stehen.

## Patentansprüche

1. Spannvorrichtung (2) zum variablen Positionieren einer Winkeleinstellung wenigstens einer Ablage (4) an einem Lastentransportwagen (1) zum Transportieren von Lasten, vorzugsweise Werkzeugkoffern, enthaltend
- einen Spannhebel (7) zum reversiblen Einstellen der Spannvorrichtung (2) in einer gespannten oder gelösten Stellung,
- eine Zugstange (11), welche von dem Spannhebel (7) reversibel in eine erste oder zweite Position bewegbar ist, wobei sich die Spannvorrichtung (2) in der gespannten Stellung befindet, wenn die Zugstange (11) in die erste Position eingestellt ist und sich die Spannvorrichtung (2) in der gelösten Stellung befindet, wenn die Zugstange (11) in die zweite Position eingestellt ist;
- ein Anbindungselement (10) zum Verbinden der Ablage (4) mit der Spannvorrichtung (2); und
- ein erstes und zweites Verbindungselement (8, 9) zum Verbinden der Spannvorrichtung (2) mit einem Rahmen des Lastentransportwagens (1)
**dadurch gekennzeichnet, dass** das Anbindungselement (10) in Form einer zylindrischen Röhre ausgestaltet ist, welche um die Zugstange (11) angeordnet ist.

2. Spannvorrichtung (2) nach Anspruch 1,
**dadurch gekennzeichnet, dass** an einem ersten Ende (10a) des Anbindungselements (10) ein erstes Positionierelement (12) und an einem zweiten Ende (10b) des Anbindungselements (10) ein zweites Positionierelement (13) vorgesehen ist.

3. Spannvorrichtung (2) nach Anspruch 1 oder 2,
**dadurch gekennzeichnet, dass** die Zugstange (11) ein erstes Ende (11a) sowie ein zweites Ende (11b) enthält, wobei das erste Ende (11a) mit dem Spannhebel (7) und das zweite Ende (11b) mit einem Blockierelement (14) verbindbar ist, sodass, wenn der Spannhebel (7) von der gespannten Stellung in die gelöste Stellung bewegt wird, die Zugstange (11) von der ersten Position in die zweite Position gebracht wird, wobei in der ersten Position sich das erste Positionierelement (12) in einer formschlüssigen Verbindung mit dem ersten Verbindungselement (8) und sich das zweite Positionierelement (13) in einer formschlüssigen Verbindung mit dem Blockierelement (14) befindet und wobei in der zweiten Position das erste Positionierelement (12) relativ zu dem ersten Verbindungselement (8) und das zweite Positionierelement (13) relativ zu dem Blockierelement (14) bewegbar ist.

4. Spannvorrichtung (2) nach wenigstens einem der Ansprüche 1 bis 3,
**dadurch gekennzeichnet, dass** die Zugstange (11) ein erstes Ende (11a) sowie ein zweites Ende (11b) enthält, wobei das erste Ende (11a) mit dem Spannhebel (7) und das zweite Ende (11b) mit einem Blockierelement (14) verbindbar ist, sodass, wenn der Spannhebel (7) von der gespannten Stellung in die gelöste Stellung bewegt wird, die Zugstange (11) von der ersten Position in die zweite Position gebracht wird, wobei in der ersten Position sich das erste Positionierelement (12) in einer kraftschlüssigen Verbindung mit dem ersten Verbindungselement (8) und sich das zweite Positionierelement (13) in einer kraftschlüssigen Verbindung mit dem Blockierelement (14) befindet und wobei in der zweiten Position das erste Positionierelement (12) relativ zu dem ersten Verbindungselement (8) und das zweite Positionierelement (13) relativ zu dem Blockierelement (14) bewegbar ist.

5. Spannvorrichtung (2) nach Anspruch 3,
**dadurch gekennzeichnet, dass** das erste Positionierelement (12) an einer ersten Seitenfläche (12a) eine Vielzahl an Erhebungen (17) und das erste Verbindungselement (8) an einer ersten Seitenfläche (8a) eine Vielzahl an Erhebungen (17) enthält, welche korrespondierend zu den Erhebungen (17) des ersten Positionierelements (12) ausgestaltet sind, sodass reversibel eine kraftschlüssige Verbindung zwischen dem ersten Verbindungselement (8) und dem ersten Positionierelement (12) erzeugbar ist.

6. Spannvorrichtung (2) nach Anspruch 3 oder 4,
**dadurch gekennzeichnet, dass** das zweite Positionierelement (13) an einer ersten Seitenfläche (13a) eine Vielzahl an Erhebungen (17) und das Blockierelement (14) an einer ersten Seitenfläche (14a) eine Vielzahl an Erhebungen (14) enthält, welche korrespondierend zu den Erhebungen (17) des zweiten Positionierelements (13) ausgestaltet sind, sodass reversibel eine kraftschlüssige Verbindung zwischen dem Blockierelement (14) und dem zweiten Positionierelement (13) erzeugbar ist.

7. Spannvorrichtung (2) nach wenigstens einem der Ansprüche 1 bis 6,
**dadurch gekennzeichnet, dass** der Spannhebel (7) einen gerundeten Vorsprung (7e) enthält, wodurch eine Kraft auf die Zugstange (11) ausgeübt werden kann, wenn der Spannhebel (7) von der gespannten in die gelöste Stellung bewegt wird, sodass die Zugstange (11) von der ersten in die zweite Position bewegt wird.

8. Spannvorrichtung (2) nach Anspruch 1,
**dadurch gekennzeichnet, dass** ein Federelement (16) zwischen dem Spannhebel (7) und dem ersten Verbindungselement (8) vorgesehen ist, welches als Druckfeder ausgestaltet ist, sodass der Spannhebel (7) von der gelösten Stellung gegen eine Federkraft des Federelements (16) in die gespannte Stellung bewegbar ist.

9. Spannvorrichtung (2) nach Anspruch 1,
**dadurch gekennzeichnet, dass** das Blockierelement (14) wenigstens einen Stift (20, 21) und das zweite Verbindungselement (9) eine Aussparung (9c, 9d) zur Aufnahme und Führung des wenigstens einen Stifts (20, 21) enthält, wobei die Aussparung (9c, 9d) in einer Richtung X länger ausgestaltet ist als der wenigstens eine Stift (20, 21), sodass der wenigstens eine Stift (20, 21) in der Aussparung (9c, 9d) von einer ersten Position in eine zweite Position bewegbar ist.

## Claims

1. Clamping device (2) for variably positioning an angular setting of at least one shelf (4) on a load transport trolley (1) for transporting loads, preferably toolboxes, comprising
- a clamping lever (7) for reversibly setting the clamping device (2) in a clamped or released position,
- a pull rod (11) which can be reversibly moved by the clamping lever (7) into a first or second position, wherein the clamping device (2) is in the clamped position when the pull rod (11) is set into the first position, and the clamping device (2) is in the released position when the pull rod (11) is set into the second position;
- an attachment element (10) for connecting the shelf (4) to the clamping device (2); and
- a first and second connecting element (8, 9) for connecting the clamping device (2) to a frame of the load transport trolley (1),
**characterized in that** the attachment element (10) is configured in the form of a cylindrical tube which is arranged around the pull rod (11).

2. Clamping device (2) according to Claim 1,
**characterized in that** a first positioning element (12) is provided on a first end (10a) of the attachment element (10), and a second positioning element (13) is provided on a second end (10b) of the attachment element (10).

3. Clamping device (2) according to Claim 1 or 2,
**characterized in that** the pull rod (11) comprises a first end (11a) and a second end (11b), wherein the first end (11a) can be connected to the clamping lever (7), and the second end (11b) can be connected to a blocking element (14), such that, when the clamping lever (7) is moved from the clamped position into the released position, the pull rod (11) is brought from the first position into the second position, wherein, in the first position, the first positioning element (12) is in form-fitting connection with the first connecting element (8), and the second positioning element (13) is in form-fitting connection with the blocking element (14), and wherein, in the second position, the first positioning element (12) can be moved relative to the first connecting element (8), and the second positioning element (13) can be moved relative to the blocking element (14).

4. Clamping device (2) according to at least one of Claims 1 to 3,
**characterized in that** the pull rod (11) comprises a first end (11a) and a second end (11b), wherein the first end (11a) can be connected to the clamping lever (7), and the second end (11b) can be connected to a blocking element (14), such that, when the clamping lever (7) is moved from the clamped position into the released position, the pull rod (11) is brought from the first position into the second position, wherein, in the first position, the first positioning element (12) is in force-fitting connection with the first connecting element (8), and the second positioning element (13) is in force-fitting connection with the blocking element (14), and wherein, in the second position, the first positioning element (12) can be moved relative to the first connecting element (8), and the second positioning element (13) can be moved relative to the blocking element (14).

5. Clamping device (2) according to Claim 3,
**characterized in that** the first positioning element (12) comprises, on a first lateral surface (12a), a plurality of elevations (17), and the first connecting element (8) comprises, on a first lateral surface (8a), a plurality of elevations (17), which are configured in a corresponding manner to the elevations (17) of the first positioning element (12), such that a force-fitting connection between the first connecting element (8) and the first positioning element (12) can be reversibly established.

6. Clamping device (2) according to Claim 3 or 4,
**characterized in that** the second positioning element (13) comprises, on a first lateral surface (13a), a plurality of elevations (17), and the blocking element (14) comprises, on a first lateral surface (14a), a plurality of elevations (14), which are configured in a corresponding manner to the elevations (17) of the second positioning element (13), such that a force-fitting connection between the blocking element (14) and the second positioning element (13) can be reversibly established.

7. Clamping device (2) according to at least one of Claims 1 to 6,
**characterized in that** the clamping lever (7) comprises a rounded projection (7e), with the result that a force can be exerted on the pull rod (11) when the clamping lever (7) is moved from the clamped position into the released position, such that the pull rod (11) is moved from the first position into the second position.

8. Clamping device (2) according to Claim 1,
**characterized in that** a spring element (16) is provided between the clamping lever (7) and the first connecting element (8) and is configured as a compression spring, such that the clamping lever (7) can be moved from the released position into the clamped position against a spring force of the spring element (16).

9. Clamping device (2) according to Claim 1,
**characterized in that** the blocking element (14) comprises at least one pin (20, 21), and the second connecting element (9) comprises a recess (9c, 9d) for receiving and guiding the at least one pin (20, 21), wherein the recess (9c, 9d) is configured to be longer in a direction X than the at least one pin (20, 21), such that the at least one pin (20, 21) can be moved in the recess (9c, 9d) from a first position into a second position.

## Revendications

1. Dispositif de serrage (2) pour le positionnement variable d'un réglage angulaire d'au moins un plateau (4) sur un chariot de transport de charges (1) destiné à transporter des charges, de préférence des boîtes à outils, comprenant
- un levier de serrage (7) destiné au réglage réversible du dispositif de serrage (2) dans une position serrée ou desserrée,
- une barre de traction (11) qui peut être déplacée par le levier de serrage (7) de manière réversible dans une première ou une deuxième position, dans lequel le dispositif de serrage (2) se trouve dans la position serrée lorsque la barre de traction (11) est réglée sur la première position, et le dispositif de serrage (2) se trouve dans la position desserrée lorsque la barre de traction (11) est réglée sur la deuxième position ;
- un élément de raccordement (10) destiné à raccorder le plateau (4) au dispositif de serrage (2) ; et
- un premier et un deuxième élément de liaison (8, 9) destinés à relier le dispositif de serrage (2) à un cadre du chariot de transport de charges (1),
**caractérisé en ce que** l'élément de raccordement (10) est configuré sous la forme d'un tube cylindrique qui est disposé autour de la barre de traction (11).

2. Dispositif de serrage (2) selon la revendication 1, **caractérisé en ce qu'**un premier élément de positionnement (12) est prévu à une première extrémité (10a) de l'élément de raccordement (10), et un deuxième élément de positionnement (13) est prévu à une deuxième extrémité (10b) de l'élément de raccordement (10).

3. Dispositif de serrage (2) selon la revendication 1 ou 2, **caractérisé en ce que** la barre de traction (11) présente une première extrémité (11a) ainsi qu'une deuxième extrémité (11b), dans lequel la première extrémité (11a) peut être reliée au levier de serrage (7) et la deuxième extrémité (11b) peut être reliée à un élément de blocage (14) de sorte que quand le levier de serrage (7) est déplacé de la position serrée à la position desserrée, la barre de traction (11) est amenée de la première position à la deuxième position, dans lequel dans la première position, le premier élément de positionnement (12) se trouve en liaison par complémentarité de forme avec le premier élément de liaison (8), et le deuxième élément de positionnement (13) se trouve en liaison par complémentarité de forme avec l'élément de blocage (14), et dans lequel dans la deuxième position, le premier élément de positionnement (12) est mobile par rapport au premier élément de liaison (8) et le deuxième élément de positionnement (13) est mobile par rapport à l'élément de blocage (14).

4. Dispositif de serrage (2) selon au moins l'une des revendications 1 à 3, **caractérisé en ce que** la barre de traction (11) présente une première extrémité (11a) ainsi qu'une deuxième extrémité (11b), dans lequel la première extrémité (11a) peut être reliée au levier de serrage (7) et la deuxième extrémité (11b) peut être reliée à un élément de blocage (14) de sorte que quand le levier de serrage (7) est déplacé de la position serrée à la position desserrée, la barre de traction (11) est amenée de la première position à la deuxième position, dans lequel dans la première position, le premier élément de positionnement (12) se trouve en liaison par adhérence avec le premier élément de liaison (8), et le deuxième élément de positionnement (13) se trouve en liaison par adhérence avec l'élément de blocage (14), et dans lequel dans la deuxième position, le premier élément de positionnement (12) est mobile par rapport au premier élément de liaison (8), et le deuxième élément de positionnement (13) est mobile par rapport à l'élément de blocage (14).

5. Dispositif de serrage (2) selon la revendication 3, **caractérisé en ce que** le premier élément de positionnement (12) présente sur une première surface latérale (12a) une pluralité de bossages (17), et le premier élément de liaison (8) présente sur une première surface latérale (8a) une pluralité de bossages (17) qui sont configurés en correspondance avec les bossages (17) du premier élément de positionnement (12) de sorte qu'une liaison par adhérence entre le premier élément de liaison (8) et le premier élément de positionnement (12) peut être réalisée de manière réversible.

6. Dispositif de serrage (2) selon la revendication 3 ou 4, **caractérisé en ce que** le deuxième élément de positionnement (13) présente sur une première surface latérale (13a) une pluralité de bossages (17), et l'élément de blocage (14) présente sur une première surface latérale (14a) une pluralité de bossages (14) qui sont configurés en correspondance avec les bossages (17) du deuxième élément de positionnement (13) de sorte qu'une liaison par adhérence entre l'élément de blocage (14) et le deuxième élément de positionnement (13) peut être réalisée de manière réversible.

7. Dispositif de serrage (2) selon au moins l'une des revendications 1 à 6, **caractérisé en ce que** le levier de serrage (7) présente une saillie arrondie (7e) de sorte qu'une force peut être exercée sur la barre de traction (11) quand le levier de serrage (7) est déplacé de la position serrée à la position desserrée de sorte que la barre de traction (11) est déplacée de la première à la deuxième position.

8. Dispositif de serrage (2) selon la revendication 1, **caractérisé en ce qu'**un élément faisant ressort (16) est prévu entre le levier de serrage (7) et le premier élément de liaison (8), qui est configuré sous la forme d'un ressort de compression de sorte que le levier de serrage (7) peut être déplacé de la position desserrée à la position serrée contre une force de ressort de l'élément faisant ressort (16).

9. Dispositif de serrage (2) selon la revendication 1, **caractérisé en ce que** l'élément de blocage (14) présente au moins une cheville (20, 21) et le deuxième élément de liaison (9) présente un évidement (9c, 9d) pour recevoir et guider ladite au moins une cheville (20, 21), dans lequel l'évidement (9c, 9d) est configuré pour être plus long dans une direction X que ladite au moins une cheville (20, 21) de sorte que ladite au moins une cheville (20, 21) peut être déplacée dans l'évidement (9c, 9d) d'une première position à une deuxième position.
